# EUROPEAN PATENT SPECIFICATION

(11) **EP 0 636 305 B1**
(45) Date of publication and mention of the grant of the patent: **04.11.1998**
(21) Application number: 94109911.1
(22) Date of filing: 27.06.1994
(51) Int. Cl.: A01C 7/04

(54) **Pneumatic precision sower**
Einzelkornsämaschine
Semoir de précision

(30) Priority: 29.07.1993 IT PN930057
(43) Date of publication of application: 01.02.1995
(73) Proprietor: MATERMACC s.r.l., I-33078 San Vito al Tagliamento (PN) (IT)
(72) Inventor: Fiorido, Antonio Francesco, I-33078 San Vito al Tagliamento (PN) (IT)
(74) Representative: Grünecker, Kinkeldey, Stockmair & Schwanhäusser Anwaltssozietät

(56) References cited:
- EP-A- 0 046 709
- DE-A- 3 823 414
- FR-A- 2 678 472
- GB-A- 1 162 683

## Description

The present invention relates to precision sower apparatus operable to deposit individual seeds in the ground at regular intervals along a drill line and in accordance to the preamble of claim 1.

Such a sower apparatus is known from FR-A-2 678 472. This apparatus uses two discs which are coaxially assembled and pivotally adjustable. Each disc is provided with a plurality of holes coaxially arranged about the axis with arrays of holes at different diameters.

A seed distributing device is also known from GB-A-1 162 683 which uses a distributing member having radially extending slots to retain the seeds.

Apparatus of this kind are known to be employed specifically for the cultivation of corn, sugar beets, soya beans, vegetables, and in general of any crop requiring seeds, nude or encapsulated, to be deposed at regular spacings. In comparison to sowers of the universal type, precision sowers offer various advantages: reduction or even elimination of the time otherwise required for the thinning out of the seedlings, simplification of the cultivation and harvest operations, and considerable savings of seeds to be dispensed.

Precision sowers are substantially divided into two categories on the base of the dispensing system employed, namely, a mechanic and a pneumatic system.

The present invention is directed to precision sowers of the pneumatic type, in which the extraction of the seeds from a supply container, their separation and their individual release are accomplished by means of a perforate disc which is provided with one or more concentric circular rows of perforations and is rotated in cooperation on one side with a suction fan acting to create a vacuum through the perforations of the disc effective to retain the seeds on the disc on their way to the discharge sector, and on the other side with a mechanical stripper acting to strip surplus seeds from the disc for their return to the supply container to thereby ensure the discharge of individual seed grains.

With known precision sowers in which the perforations of the disc are of substantially circular shape, it is difficult to achieve the retention of only one seed grain in each perforation of the disc, particularly when the seeds are of irregular shape and variable dimensions. For this reason there is a tendency to employ a disc with perforations of greater size to thereby ensure the retention of at least one seed grain. While the increase of the size of the perforations is effective to ensure the retention of seed grains of bigger size, it creates the problem that seed grains of smaller size may pass through the preforations, or that a number of smaller grains get jammed in a perforation so as to obturate it. It is therefore difficult to strip surplus seeds from the disc so as to leave only a single grain in each perforation, while seed grains jammed in a perforation may be damaged by the stripper cooperating with the perforate disc. To relieve these problems, it is customary to provide the sower with a number of interchangeable discs having perforations of different sizes for adaptation to seeds of different shapes and average sizes.

In addition, the stripper has to be positionable and adjustable so as to ensure the retention of only a single grain in each perforation. In known sowers this feat is impossible to accomplish in the case of seeds of irregular shape, because an adjustment permitting the separation of two smaller seeds retained in a single perforation may frequently lead to a seed grain of bigger size being stripped off the disc, resulting in a gap in the drill line. On the other hand, an adjustment of the stripper ensuring the retention on the disc of bigger or incorrectly positioned grains, would permit more than one seed grain of smaller size to be retained in a single perforation, to result in irregular seed distribution.

Described in Italian Patent 1,145,917 is a precision sower of the pneumatic type in which the seeding disc is composed of two parts, specifically, a disc body connected to the suction fan, and a disc sheet contacting and covering the disc body on its side facing the seed supply. The disc body is stationary and provided with a spiral-shaped guide groove extending from its center to its outer periphery to define a seed ejection path. The disc sheet is rotatable and provided with a plurality of radial grooves extending from a center location to the periphery of the disc. This construction results in that the seeds may be withdrawn from the supply container at a slower speed to thereby facilitate the retention of the seeds on the disc. On the other hand, the radial grooves have to be adequately spaced for permitting the seeds to attach to the disc at a relatively small central area thereof, whereby the number of these grooves is limited. As a result, only a small number of seeds is dispensed during each revolution of the disc, so that the sowing operation has to be carried out at a very slow speed of advance. Otherwise the result of the operation would be unsatisfactory, because the seeds would be subjected to excessive centrifugal forces. This system functions well with seeds of round shape, but is less satisfactory for dispensing single seed grains when these are of irregular shape, for instance elongate shape, or of varying dimensions.

In addition, this solution is structurally complicated, as it requires a disc composed of two parts each provided with particular slots and grooves. From the functional viewpoint, as the seeds come into contact with both parts of the disc, they are subjected to a rolling motion which, although it promotes the separation of the seeds, may result in their being damaged by their frictional contact with the surfaces of the two parts of the disc over a considerable distance.

European Patent Application EP-A-0 338 883 describes a precision sower of the pneumatic type in which the dispenser disc is provided with equidistant circular perforations disposed along one or two circular rows adjacent the outer rim of the disc. A characteristic of this solution is the construction of the vacuum system with an internal passage of varying section and divided into two branches, one of which is provided with a closure element operable to isolate it from the suction fan. In one embodiment, the dispenser disc is provided with circular perforations disposed along two circular rows, and a series of blades alternating with the perforations and acting to agitate the seeds in the container and to convey them from the point whereat the vacuum retention terminates to the point whereat the seeds are dropped to the ground. In this embodiment, as the seeds pass from one of the circular rows of perforations to the other, there occurs the separation of the individual seed grains independently, within certain limits, of the size and the shape of the seeds. On the other hand it is evident that the space occupied by the blades between adjacent perforations limits the number of perforations which can be provided in each circular row, and thus also the number of seeds to be dispensed during each revolution of the disc. This again implies that the speed of advance in the field has to be reduced for avoiding an excessively high rotational speed of the disc with its negative effects on the seeds due to centrifugal forces. The construction, finally, of this system is rather expensive.

In a second embodiment functioning analogous to conventional pneumatic precision sowers, the disc is not provided with blades as above, and associated instead to a stripper which is provided with rectilinear incisions and adjustable in position relative to the perforations of the disc, so that the seeds retained on the disc by vacuum strike the projections of the stripper plate and are thus individually separated. In any case, this solution also offers merely limited advantages. The circular perforations of the dispenser disc may on the one hand not have an excessively great diameter, for avoiding that the seeds could get jammed therein or pass therethrough, nor may they on the other hand have an excessively small diameter, because in this case the vacuum action might be insufficient for withdrawing the seeds from the supply hopper. In addition, the efficiency of the stripper is unsatisfactory in the case of seeds of irregular shapes and sizes.

Solutions similar to the preceding are described in Patents FR-A-2 643 212, GB-A-2 132 395, US-A-3 990 606 and US-A-4 074 830.

European Patent Application EP-A-0 536 543 of the present applicant describes a pneumatic precision sower having a dispenser disc provided with perforations and cooperating with a seed supply container and an air aspiration system. The perforations of the disc are of elongate shape with a reduced transverse section. A stripper element cooperates with the disc by by intersecting the aspiration sectional area of the perforations This solution solves to a substantial degree the problems of the above state of the art sowers, but does not fully eliminate the problem relating to seeds of elongate shape with a very narrow section (for instance certain hybrid corn seeds, sunflower seeds and the like), which may still get caught in or pass through the perforations of the dispenser disc.

It is therefore the main object of the present invention to provide an improved precision sower of the pneumatic type which in particular solves this last-named specific problem by reducing the number of discs required for adapting the sower to different kinds of seeds, and by particularly preventing seeds of elongate shape with a very narrow section from passing through the perforations of the dispenser disc.

The principal characteristic of the present invention as set forth in claim 1 consists in the provision that said disc is adapted to be rotated by the driver disc and that within the aspiration housing and closely adjacent the surface of the seed dispenser disc, there is mounted at least one annular element adapted to intersect the perforations of the disc at least over a circumferential distance corresponding to the sector wherealong the aspiration of air through said housing is effective.

The characteristics and advantages of the present invention will become more clearly evident from the following description, given by way of example with reference to the accompanying drawings, wherein:

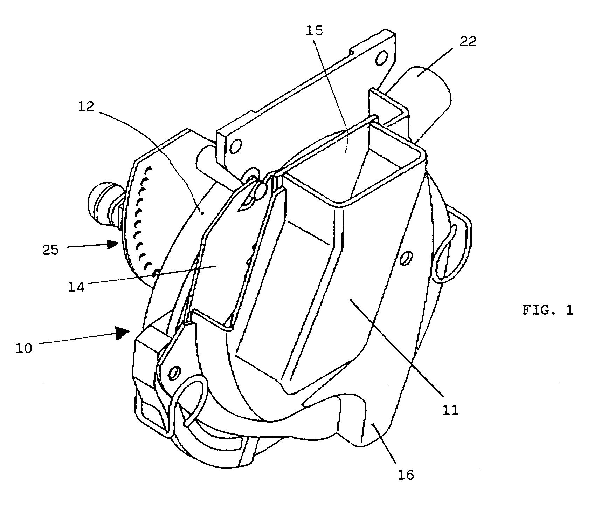

- fig. 1: shows a perspective view of a precision sower according to an embodiment of the invention, and
- fig. 2: shows an exploded perspective view of the sower of fig. 1.

The single-seed dispenser 10 according to the invention may be used to equip any type of known sower otherwise not shown.

The dispenser 10 is substantially composed of a seed supply container 11 and a hollow housing 12, with a perforate disc 13 disposed therebetween in association with a stripper 14.

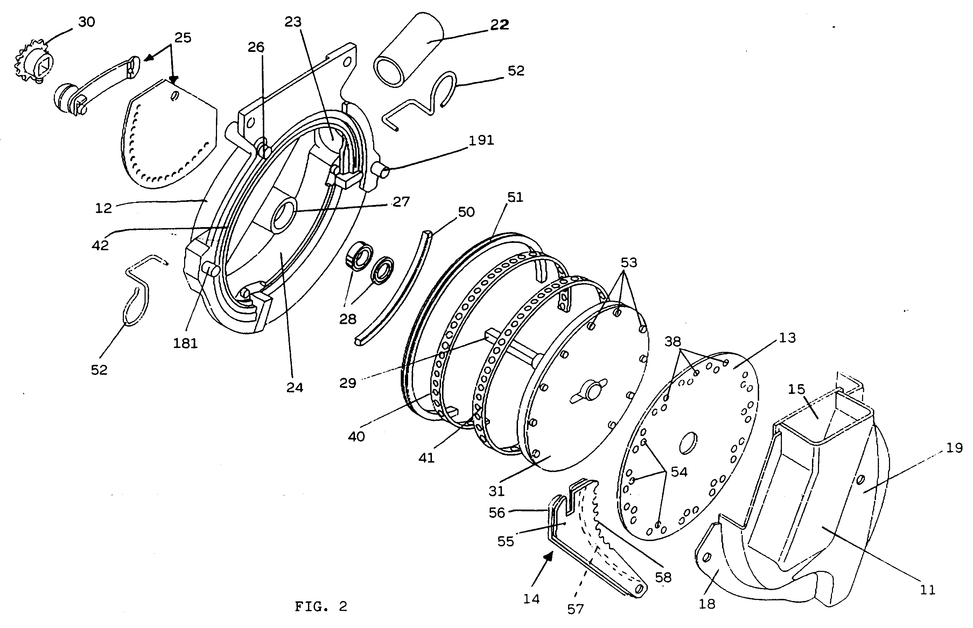

Seed supply container 11 has its upper portion provided with a seed charging hopper 15, and its lower portion with a discharge chute 16 for guiding the dispensed seeds towards the ground. Container 11 is further provided with perforate flanges 18, 19 adapted to cooperate with respective pins 181 and 191 of housing 12 for joining the two members so as to form an enclosed space therebetween. Housing 12 is connected to an air aspiration device (for instance a motorized suction blower of a known and therefore not shown type) by a suction conduit 22 opening through a port 23 (fig. 2) into a suction chamber 24 formed in housing 12 to extend over a circumferential sector therein. Suction chamber 24 is open towards the disc 13 which in the mounted state of the dispenser is enclosed between container 1 and housing 12.

Mounted on housing 12 is a manual adjuster arm with a setting plate 25 and acting on an eccentric pin 26 or an analogous component for adjusting the position of stripper 14 as will be explained in the following.

A hub portion of housing 12 is formed with a bore 27 having mounted therein, by means of bearings 28, a shaft 29 adapted to be rotated, for instance by a motor-transmission assembly (not shown) connected to a gear or sprocket 30 on shaft 29. A driver disc 31 fixedly connected to shaft 29 acts to transmit the rotation to dispenser disc 13.

Seed supply container 11 and aspiration housing 12 are held together, with the interposition therebetween of sealing gaskets 50 and 51, by clamp hooks 52 releasably engaging flanges 18 and 19 of container 11 and mounted in suitable bores (not shown) formed in the rim of housing 12.

According to the principal characteristic of the invention, there is provided at least one substantially annular element (two such elements 40 and 41 are shown in fig. 2) for mounting in a corresponding seat 42 formed in housing 12. This element has a diameter greater than that of driver disc 31, its circumferential rim corresponding to a circumferential line along which dispenser disc 13 is formed with perforations 38 for the aspiration of air. In the embodiment shown in fig. 2, annular elements 40 and 41 are formed of metal or plastic sheet material and disposed substantially perpendicular to the adjacent surface of disc 13 so as to intersect the perforations 38 formed therein. The two elements 40 and 41 have different diameters, of course, and are mounted concentric with one another. The elements 40 and 41 may obviously be replaced by a sheet element formed with perforations having a smaller diameter than perforations 38, and disposed parallel to the surface of disc 13 to thereby obtain the same effect. In a still further modification elements 40 and 41 may be replaced by a screen of a suitably calibrated mesh.

As will be readily understood, the employ of divider elements of the type described above mounted to intersect or subdivide the passage area of perforations 38 in disc 13, is effective to prevent the passage through said perforations of seeds having an elongate shape with very narrow section, independently, within a certain range, of the dimensions of perforations 38.

This permits a reduction of the number of interchangeable discs 13, with perforations of different dimensions, required for adapting the sower to the great variety of seeds to be dispensed.

Another important characteristic of the apparatus according to the invention relates to discs 13 and 31. In known sowers, the side of disc 13 facing towards container 11 is provided with agitator elements adapted to act on the seeds descending from hopper 15 to thereby facilitate their vacuum-retention by perforations 38. In the embodiment of the invention as illustrated, driver disc 31 is instead provided with a circumferentially spaced array of pins 53 as shown in fig. 2, adapted to be received in corresponding bores 54 formed in dispenser disc 13, to project therethrough towards container 11. Pins 53 are thus adapted to agitate the seeds in container 11, in addition to transmitting the rotation of driver disc 31 to dispenser disc 13. This permits the construction and operability of the apparatus to be simplified by eliminating the necessity of providing agitator elements on each of the various discs 13.

Another particular of the apparatus according to the invention relates to the stripper 14 cooperating with disc 13. As shown in fig. 2, stripper 14 is preferably composed of two sheet members 55 and 56 fixedly connected to one another so as to define a space 57 there between as indicated by dotted lines in fig. 2. The circumferential rim of disc 13 is adapted to be received in space 57, so that stripper 14 is steadily guided by the disc as it rotats between the two sheet members 55 and 56. This ensures maximum efficiency and precision in the single-seed dispensing operation.

Stripper 14 may of course be in the usual manner provided with a crenellated portion 58 in aid of ensuring the retention of single seed grains by each of the preforations 38 of disc 13.

Stripper 14 is mounted on a fixed pin within housing 12 and adjustable by means of the eccentric pin 26 and adjuster arm 25.

Actuation of adjuster arm 25 causes eccentric pin 26 to be rotated to thereby adjust the position of stripper 14 relative to dispenser disc 13 and its perforations 38 in accordance with the seeds toi be dispensed. The displacement and adjustment of the stripper may of course also be accomplished by other mechanical elements such as screws, levers or slide members for always obtaining the same effect.

In operation, after container 11 has been charged with seeds, disc 13 is set in rotation (clockwise as viewed in fig. 2), and the air aspiration system is activated. The aspiration of air through conduit 22, port 23, chamber 24 and perforations 38 causes the seeds to be retained on disc 13 and to be entrained in rotation thereby. As the thus entrained seeds pass the crenellated portion 58 of stripper 14, surplus seed grains are progressively stripped off the disc 13, so that, provided stripper 14 is properly adjusted, a single seed grain will be retained by each perforation 38 as it reaches the downstream end of the crenelated portion 58. The seeds are thus retained on disc 13 until the respective perforations reach the release position adjacent discharge chute 16 at the downstream end of suction chamber 24, whereat the seeds are no longer subjected to the suction effect.

It is finally to be noted that the solution according to the present invention can be readily applied to existing sowers, particularly as regards the insertion of the elements 40 and 41 for partitioning the perforations 38 of the dispenser disc 13. All that is required to this purpose is to form the seats for these elements in housing 12 by a simple machining operation.

The embodiment of the apparatus described may of course be modified and altered in any suitable manner within the purview of the invention and the characteristics as claimed.

## Claims

1. A pneumatic precision sower equipped with a single-seed dispenser comprising a disc (13) formed with circumferentially disposed perforations (38) adjacent its outer rim, said disc (13) being adapted to cooperate with a seed supply container (11) on one side, and on the other with a housing (12) provided with a cavity (24) connected to an air aspiration system for withdrawing the seeds from said container (11) by the action of a vacuum applied to said perforations (38), a stripper element (14) being provided adjacent said perforations (38) on the side of said disc (13) facing said container (11) for the isolation of single seed grains,
**characterized in that** said disc (13) is adapted to be rotated by a driver disc (31) and that within said housing (12) and adjacent the surface of said disc (13) there is mounted at least one annular element (40 41) acting to partition the passage area of said perforations (38) of said disc (13) at least over a circumferential distance corresponding to the range wherein the aspiration of air through said housing (12) is effective.

2. A sower according to claim 1, characterized in that said at leastbone annular element (40, 41) is formed of a rigid sheet material disposed substantially perpendicular to said disc (13).

3. A sower according to claim 1, characterized in that said annular element (40, 41) is made of a sheet material disposed with its surface parallel to that of said disc (13) and formed with perforations having dimensions substantially smaller than those of said perforations (38) of said disc (13).

4. A sower according to any of the preceding claims, characterized in that on its side facing said dispenser disc (13), said driver disc (31) is provided with pins (52) projecting through bores (54) in said dispenser disc (13) and acting to agitate the seeds in the lower part of said supply container (11).

5. A sower according to any of the preceding claims, characterized in that said stripper element (14) is formed of two sheet members (55, 56) connected to one another so as to define a space (57) therebetween into which said dispenser disc (13) projects so as to guide said stripper element (14) during its rotation.

## Patentansprüche

1. Pneumatische Einzelkornsämaschine mit einem Einzelkornspender, der eine Scheibe (13) umfaßt, die mit umlaufend angeordneten Öffnungen (38) angrenzend ihres Außenrandes versehen ist, wobei die Scheibe (13) angepaßt ist, um mit einem Saatkornzuführbehälter (11) auf einer Seite und auf der anderen Seite mit einem Gehäuse (12) zusammenzuwirken, das mit einem Hohlraum (24) versehen ist, der mit einem Luftsaugsystem zum Ansaugen von Saatkörnern aus dem Behälter (11) durch die Wirkung eines Vakuums, das an den Öffnungen (38) aufgebracht wird, verbunden ist, einem Abstreifelement (14), das angrenzend den Öffnungen (38) an der Seite der Scheibe (13) angeordnet ist, die dem Behälter zugeordnet ist, um einzelne Saatkörner zu isolieren, **dadurch gekennzeichnet,** daß die Scheibe (13) angepaßt ist, um durch eine Antriebsscheibe (31) angetrieben zu werden, und daß in dem Gehäuse (12) und angrenzend der Oberfläche der Scheibe (13) mindestens ein ringförmiges Element (14, 41) angeordnet ist, das wirkt, um die Durchtrittsfläche der Öffnungen (38) der Scheibe (13) zumindet über einen umlaufenden Bereich, in dem das Absaugen der Luft durch das Gehäuse (12) wirksam ist, zu unterteilen.

2. Sämaschine gemäß Anspruch 1, **dadurch gekennzeichnet,** daß zumindest das eine ringförmige Element (40, 41) aus einem steifen Plattenmaterial gebildet ist, das im wesentlichen senkrecht zur Scheibe (13) angeordnet ist.

3. Sämaschine gemäß Anspruch 1, **dadurch gekennzeichnet,** daß das ringförmige Element (40, 41) aus einem plattenförmigen Material hergestellt ist, dessen Fläche, die parallel zu der Scheibe (13) angeordnet ist, mit Öffnungen versehen ist, die eine Abmessung aufweisen, die im wesentlichen kleiner ist, als die Abmessung der Öffnungen (38) der Scheibe (13).

4. Sämaschine gemäß einem der vorhergehenden Ansprüche, **dadurch gekennzeichnet,** daß auf ihrer Seite, die der Spenderscheibe (13) zugewandt ist, die Antriebsscheibe (31) mit Stiften (52) versehen ist, die durch Bohrungen (54) in der Spenderscheibe (13) hervorstehen und wirken, um die Saatkörner im unteren Teil des Zuführbehälters (11) zu bewegen.

5. Sämaschine gemäß einem der vorhergehenden Ansprüche, **dadurch gekennzeichnet,** daß das Abstreifelement (14) aus zwei plattenförmigen Elementen (55, 56) geformt ist, die miteinander verbunden sind, um einen Abstand (57) zwischen diesen zu bilden, in welchen sich die Spenderscheibe (13) hineinerstreckt, so daß das Abstreifelement (14) bei ihrer Drehbewegung geführt ist.

## Revendications

1. Semoir de précision pneumatique équipé d'un distributeur de graines uniques comportant un disque (13) muni de perforations (38) disposées circonférentiellement au voisinage de son bord extérieur, ledit disque (13) étant conçu pour coopérer avec un réservoir (11) d'alimentation en graines sur un côté, et sur l'autre côté avec un boîtier (12) muni d'une cavité (24) reliée à un système d'aspiration d'air pour retirer les graines dudit réservoir (11) par l'action d'un vide appliqué auxdites perforations (38), un élément d'évacuation (14) étant prévu au voisinage desdites perforations (38) sur le côté dudit disque (13) faisant face audit réservoir (11) pour l'isolation de graines uniques,
**caractérisé par le fait que** ledit disque (13) est conçu pour être entraîné en rotation par un disque d'entraînement (31) et par le fait que, à l'intérieur dudit boîtier (12) et au voisinage de la surface dudit disque (13), est monté au moins un élément annulaire (40,41) agissant pour cloisonner ou subdiviser la zone de passage desdites perforations (38) dudit disque (13) au moins sur une distance circonférentielle correspondant à la portée sur laquelle l'aspiration d'air à travers ledit boîtier (12) est effective.

2. Semoir selon la revendication 1,
**caractérisé par le fait que** ledit au moins un élément annulaire (40, 41) est formé d'un matériau en feuille rigide disposé sensiblement perpendiculaire audit disque (13).

3. Semoir selon la revendication 1,
**caractérisé par le fait que** ledit élément annulaire (40, 41) est fait d'un matériau en feuille disposé avec sa surface parallèle à celle dudit disque (13) et muni de perforations ayant des dimensions sensiblement plus petites que celles desdites perforations (38) dudit disque (13).

4. Semoir selon une quelconque des revendications précédentes,
**caractérisé par le fait que**, sur son côté faisant face audit disque distributeur (13), ledit disque d'entraînement (31) est muni de plots (53) se projetant à travers des trous (54) dans ledit disque distributeur (13) et agissant pour agiter les graines dans la partie inférieure dudit réservoir d'alimentation (11).

5. Semoir selon une quelconque des revendications précédentes,
**caractérisé par le fait que** ledit élément d'évacuation (14) est formé de deux organes en feuille (55,56) reliés l'un à l'autre de façon à définir un espace (57) entre ceux-ci dans lequel ledit disque distributeur (13) se projette de manière à guider ledit élément d'évacuation (14) durant sa rotation.
